# FASCICULE DE BREVET EUROPEEN

(11) **EP 2 284 716 B1**
(45) Date de publication et mention de la délivrance du brevet: **15.03.2017**
(21) Numéro de dépôt: 10169961.9
(22) Date de dépôt: 19.07.2010
(51) Int. Cl.: H04L 12/40, H02J 13/00

(54) **Système de transmission de données via un bus unifilaire**
Datenübertragungssystem über einen Einzeldrahtbus
System of data transmission via a single wire bus

(30) Priorité: 23.07.2009 FR 0955163
(43) Date de publication de la demande: 16.02.2011
(73) Titulaire: Delta Dore, 35270 Bonnemain (FR)
(72) Inventeur: Desmont, Christian, 35270 Bonnemain (FR)
(74) Mandataire: Le Guen-Maillet

(56) Documents cités:
- EP-A1- 0 707 371
- FR-A1- 2 727 812
- US-A- 4 222 035

## Description

La présente invention concerne un système de transmission de données via un bus unifilaire, tel qu'un système de transmission de données entre une unité de gestion d'énergie et une pluralité de dispositifs de chauffage via un bus appelé "fil pilote".

On connaît déjà un tel système de transmission de données via un fil pilote, dit quatre ordres car les données en question qui sont émises entre un gestionnaire d'énergie et les dispositifs de chauffage se résument en définitive à quatre ordres : confort, économique, hors gel et arrêt. Il existe également des fils pilote six ordres qui aux modes précédents, viennent en ajouter deux autres qui sont un mode confort - 1°C et un mode confort - 2°C. Pour effectuer la transmission de ces ordres, l'unité de gestion d'énergie place un signal prédéterminé sur le fil pilote, signal construit à partir de la phase du secteur : par exemple, absence de signal pour le mode confort, pleine alternance pour le mode économique, demi-alternance positive pour l'arrêt et demi-alternance négative pour le mode hors-gel.

Ce système de transmission fil pilote quatre ou six ordres est unidirectionnel car les ordres sont transmis de l'unité de gestion aux dispositifs de chauffage. Par contre, il peut être intéressant qu'il soit bidirectionnel pour permettre la remontée d'informations des dispositifs de chauffage vers l'unité de gestion. Cela peut notamment être le cas lorsque les dispositifs de chauffage comportent des thermostats, des capteurs de température, des moyens de mesure de consommation, etc. et que les informations générées par ces moyens peuvent être prises en compte par l'unité de gestion, notamment pour économiser de manière optimale l'énergie.

Pour rendre le système de transmission précédemment décrit bidirectionnel, on a déjà proposé un système pour la transmission, par un bus, de données numériques, notamment dans le brevet EP707371. Dans ce système, des données numériques représentées par une suite de 0 et de 1 sont transmises par la présence d'une demi-alternance, positive ou négative, pour un 1 et l'absence d'une telle demi-alternance pour un 0. Ainsi, le bus est au repos au potentiel de la phase et transmet alors un 1 ou une suite de 1 et, pour obtenir un 0, il est pincé, c'est-à-dire forcé au potentiel du neutre du secteur.

Ce système donne entière satisfaction mais on a cherché à l'améliorer, notamment pour éviter la consommation d'énergie qui résulte du pincement du bus au potentiel du neutre du secteur.

Pour ce faire, la présente invention propose un système de transmission de données par au moins un bus unifilaire entre une unité d'émission/réception centrale et au moins une unité périphérique, ladite unité d'émission/réception centrale comprenant elle-même une unité de contrôle prévue pour commander un interrupteur commandé. Selon l'invention, pour ledit ou chaque bus unifilaire, ledit interrupteur commandé a une borne d'interrupteur qui est reliée à la phase du secteur alors que l'autre borne d'interrupteur est connectée, via une résistance, audit bus unifilaire.

L'invention étant définie par les caractéristiques des revendications indépendantes. Les modes de réalisations sont définis par les revendications dépendantes.

Avantageusement, ledit interrupteur commandé est un triac dont l'anode A1 est reliée à la phase du secteur, l'anode A2 au bus unifilaire via ladite résistance et la grille à ladite sortie de ladite unité de contrôle, ladite unité de contrôle étant alimentée par une alimentation avec pour potentiel de référence la phase du secteur.

Dans un mode de réalisation particulier, ladite unité périphérique est une unité d'émission/réception périphérique comprenant un interrupteur commandé et une unité de contrôle prévue pour commander ledit interrupteur commandé. Ledit interrupteur commandé a alors une borne d'interrupteur qui est reliée au neutre du secteur alors que l'autre borne d'interrupteur est connectée, via une résistance, audit bus unifilaire.

Avantageusement, ledit interrupteur commandé est un triac dont l'anode A1 est reliée au neutre du secteur, l'anode A2 au bus unifilaire via ladite résistance et la grille à ladite sortie de ladite unité de contrôle, ladite unité de contrôle étant alimentée par une alimentation avec pour potentiel de référence le neutre du secteur.

Avantageusement, ladite unité de contrôle centrale a son fonctionnement qui est synchronisé avec les alternances du secteur.

Avantageusement, ladite unité de contrôle centrale et/ou ladite ou chaque unité de contrôle périphérique est reliée au bus unifilaire par l'intermédiaire d'un circuit de mise en forme.

La présente invention concerne également un procédé de transmission de données par au moins un bus unifilaire (entre une unité d'émission/réception centrale et au moins une unité périphérique d'un système de transmission de données, ladite unité d'émission/réception centrale comprenant elle-même une unité de contrôle prévue pour commander un interrupteur commandé ayant une borne d'interrupteur qui est reliée à la phase du secteur alors que l'autre borne d'interrupteur est connectée, via une résistance, audit bus unifilaire, ladite unité périphérique étant une unité d'émission/réception périphérique comprenant un interrupteur commandé et une unité de contrôle prévue pour commander ledit interrupteur commandé, ledit interrupteur commandé ayant une borne d'interrupteur qui est reliée au neutre du secteur alors que l'autre borne d'interrupteur est connectée, via une résistance, audit bus unifilaire, ledit procédé, pour transmettre des données de l'unité périphérique vers ladite unité d'émission/réception centrale, consistant à d'abord fermer l'interrupteur commandé de l'unité centrale puis, soit à fermer l'interrupteur de l'unité périphérique pour émettre un premier niveau logique sur le bus unifilaire, soit à laisser ouvert l'interrupteur de l'unité périphérique pour émettre un second niveau logique sur le bus unifilaire.

Avantageusement, la transmission de données sur le bus unifilaire est du type asynchrone, chaque état binaire étant codé sur un temps élémentaire correspondant à une demi-alternance du secteur.

Les caractéristiques de l'invention mentionnées ci-dessus, ainsi que d'autres, apparaîtront à la lecture de la description d'un mode de réalisation de la présente invention, ladite description étant faite en relation avec les dessins joints, parmi lesquels :
La Fig. 1 est un schéma d'un système de transmission de données selon la présente invention,
La Fig. 2 est un schéma synoptique d'une unité d'émission/réception d'une unité centrale reliée via un bus unifilaire FP à une unité d'émission/réception d'une unité périphérique d'un système de transmission de données selon la présente invention,
La Fig. 3 est un schéma synoptique d'un mode de réalisation d'un circuit de synchronisation qui équipe une unité d'émission/réception d'une unité centrale d'un système de transmission de données selon la présente invention,
La Fig. 4 est un schéma synoptique d'un mode de réalisation d'un circuit de mise en forme qui équipe une unité d'émission/réception d'une unité centrale ou d'une unité périphérique d'un système de transmission de données selon la présente invention, et
La Fig. 5 est un diagramme montrant la forme du signal présent sur le bus unifilaire d'un système de transmission de données selon la présente invention lors de la transmission de l'octet 11010010.

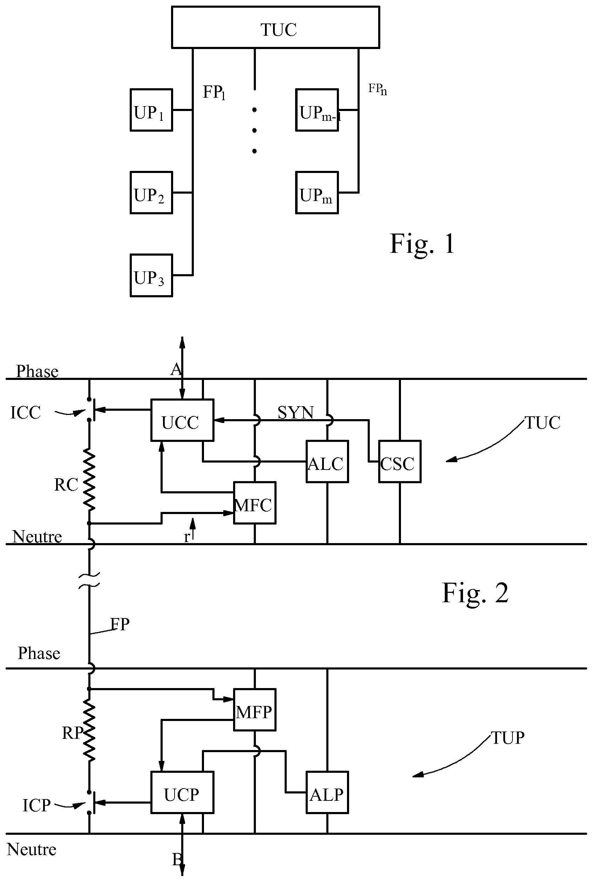

Un système de transmission de données objet de la présente invention est représenté à la Fig. 1 et comprend une unité d'émission/réception centrale TUC, par exemple de gestion d'énergie, qui est reliée, par une pluralité de bus unifilaires FPᵢ (i = 1 à n), encore appelés Fils Pilotes, à une pluralité d'unités périphériques UPⱼ (j = 1 à m).

Un schéma synoptique de l'unité d'émission/réception centrale TUC est donné à la Fig. 2. Cette unité d'émission/réception TUC est prévue pour recevoir, via un bus approprié (représenté par une flèche double), des signaux ou informations d'autres unités (non représentées) (par exemple, de moyens de mesure, de moyens de fourniture d'information de période horaire, etc.) et envoyer, via le même bus ou un autre bus approprié, des informations à d'autres unités (non représentées), (telles que des moyens de contrôle d'énergie, des moyens d'affichage, etc.).

Elle comprend essentiellement une unité de contrôle UCC et un interrupteur commandé ICC dont une borne d'interrupteur est reliée à la phase du secteur alors que l'autre borne d'interrupteur est connectée, via une résistance RC, au bus FP. Quant à la borne de commande, elle est reliée à une sortie de l'unité de contrôle UCC. Ainsi, lorsque l'interrupteur ICC est fermé, le bus FP est au potentiel de la phase du secteur alors que lorsqu'il est ouvert, le bus FP est au potentiel du neutre du secteur, via la résistance interne r des unités directement reliées au bus FP (décrites ultérieurement).

Si plusieurs bus FP sont pilotés par l'unité d'émission/réception TUC, autant d'interrupteurs ICC pilotés par la même unité de contrôle UCC que de bus FP doivent être prévus.

Chaque unité périphérique UP est au moins prévue pour recevoir des données du bus unifilaire FP. Elle est également prévue pour recevoir et envoyer, via un bus approprié (représenté par une flèche double), des informations à d'autres unités externes (non représentées). Elle est prévue pour ne recevoir des données que d'un seul bus unifilaire FP et pour ne piloter qu'un tel seul bus.

Dans l'exemple de réalisation représenté à la Fig. 2, l'unité périphérique UP est une unité d'émission/réception TUP capable non seulement de recevoir des données du bus unifilaire FP mais également d'émettre de telles données sur ce bus FP. Elle comprend essentiellement une unité de contrôle UCP et un interrupteur commandé ICP dont une borne d'interrupteur est reliée au neutre du secteur alors que l'autre borne d'interrupteur est connectée, via une résistance RP, au bus FP. La borne de commande d'interrupteur ICP est reliée à l'unité de contrôle UCP pour y être commandée.

Lorsque des données sont à émettre de l'unité d'émission/réception TUC de l'unité centrale UC à une unité d'émission/réception TUP d'une unité périphérique UP, l'interrupteur ICC de l'unité TUC, commandé de manière appropriée en synchronisme avec les alternances de la phase du secteur, peut transmettre des suites de niveaux logiques 0 et de 1 en portant le bus FP, soit au potentiel du neutre du secteur pour la transmission d'un premier niveau de ces niveaux logiques, par exemple le niveau 0, soit au potentiel de la phase du secteur pour la transmission de l'autre niveau logique, par exemple le niveau 1, et l'alimentant par une demi-alternance, positive ou négative.

Lorsque des données sont à émettre de l'unité d'émission/réception TUP d'une unité périphérique UP à l'unité d'émission/réception TUC de l'unité centrale UC, l'interrupteur ICC de l'unité TUC est d'abord fermé. Commandé de manière appropriée en synchronisme avec les alternances de la phase du secteur, l'interrupteur ICP de l'unité TUP peut transmettre des suites de niveaux logiques 0 et de 1 en portant le bus FP, soit au potentiel du neutre du secteur pour la transmission d'un premier niveau de ces niveaux logiques, par exemple le niveau 0 et, dans ce cas, il sera fermé, soit au potentiel de la phase du secteur pour la transmission de l'autre niveau logique, par exemple le niveau 1, et, dans ce cas, il sera ouvert laissant la présence d'une demi-alternance, positive ou négative, sur le bus FP.

Au repos, lorsque aucune donnée n'est à émettre ni de l'unité TUP, ni d'une unité TUC, les interrupteurs ICC et ICP sont ouverts. Durant ces phases, aucun courant électrique n'est consommé par le bus unifilaire FP.

L'unité d'émission/réception TUC de l'unité centrale UC est équipée d'une unité de contrôle UCC qui est alimentée, d'une part, par une alimentation ALC, elle-même reliée à la phase et au neutre du secteur, et, d'autre part, à la phase du secteur en tant que potentiel de référence. L'alimentation ALC délivre une tension constante, par exemple 5 volts, par rapport à la phase du secteur, laquelle constitue le potentiel de référence de ladite alimentation ALC. L'unité de contrôle UCC reçoit le signal de synchronisation SYN d'un circuit de synchronisation CSC relié à la phase et au neutre du secteur, ledit signal de synchronisation SYN étant synchrone des alternances du secteur.

L'unité de contrôle UCC est reliée à la borne de commande de l'interrupteur commandé ICC qu'elle commande de manière synchronisée, grâce au signal de synchronisation SYN, avec les alternances du secteur pour émettre des données sur le bus FP, comme expliqué ci-dessus. Plus précisément, l'interrupteur ICC est commandé par la différence de potentiel qui est présente entre sa borne d'interrupteur reliée à la phase du secteur et sa borne de commande, ce qui implique que le potentiel de référence de l'alimentation de l'unité de contrôle UCC soit au potentiel de la phase du secteur.

L'unité de contrôle UCC est également reliée au bus unifilaire FP, via un circuit de mise en forme MFC, lui-même relié à la phase et au neutre du secteur. Lorsque le bus FP est au potentiel de la phase du secteur, soit durant une demi-alternance positive, soit durant une demi-alternance négative, le circuit de mise en forme MFC délivre à l'unité de contrôle UCC un signal correspondant à un 1 logique et lorsque le bus est au potentiel du neutre du secteur, le circuit de mise en forme MFC délivre un signal correspondant à un 0 logique.

En cas de pluralité de bus FP, l'unité de contrôle UCC commandera chacun des interrupteurs ICC correspondant. De même, autant de circuits de mise en forme MFC que de bus FP sont à prévoir, chacun étant relié à l'unité de contrôle UCC.

L'unité d'émission/réception TUP d'une unité périphérique UP est équipée d'une unité de contrôle UCP qui est alimentée, d'une part, par une alimentation ALP, elle-même reliée à la phase et au neutre du secteur, et, d'autre part, au neutre du secteur en tant que potentiel de référence. L'alimentation ALP délivre une tension constante, par exemple 5 volts, entre sa sortie et le neutre du secteur, lequel constitue le potentiel de référence de ladite alimentation ALP.

L'unité de contrôle UCP est reliée à la borne de commande de l'interrupteur commandé ICP qu'elle commande de manière synchronisée avec les alternances du secteur pour émettre des données sur le bus FP, comme expliqué ci-dessus. Plus précisément, l'interrupteur ICP est commandé par la différence de potentiel qui est présente entre sa borne d'interrupteur reliée au neutre du secteur et sa borne de commande, ce qui implique que le potentiel de référence de l'alimentation de l'unité de contrôle UCP soit au potentiel du neutre du secteur.

L'unité de contrôle UCP est également reliée au bus unifilaire FP, via un circuit de mise en forme MFP, lui-même relié à la phase et au neutre du secteur. Lorsque le bus FP est au potentiel de la phase du secteur, soit durant une demi-alternance positive, soit durant une demi-alternance négative, le circuit de mise en forme MFP délivre à l'unité de contrôle UCP un signal correspondant à un 1 logique et lorsque le bus est au potentiel du neutre du secteur, le circuit de mise en forme MFP délivre un signal correspondant à un 0 logique.

La synchronisation de la commande de l'interrupteur ICP avec les alternances du secteur peut être opérée, à l'instar de l'unité d'émission/réception TUC de l'unité centrale UC, avec une unité de synchronisation spécialisée. Elle peut également être opérée par verrouillage de phase à partir des signaux reçus, via le circuit de mise en forme MFP, du bus FP, notamment pendant une séquence de synchronisation appropriée.

L'interrupteur commandé ICC peut être du type TRIAC avec l'anode A1 reliée à la phase du secteur, l'anode A2 au bus FP et la grille à l'unité de commande UCC pour y recevoir des signaux de commande. De même, l'interrupteur commandé ICP peut être du type TRIAC avec l'anode A1 reliée au neutre du secteur, l'anode A2 reliée à la résistance RP et la grille à l'unité de commande UCP pour y recevoir des signaux de commande.

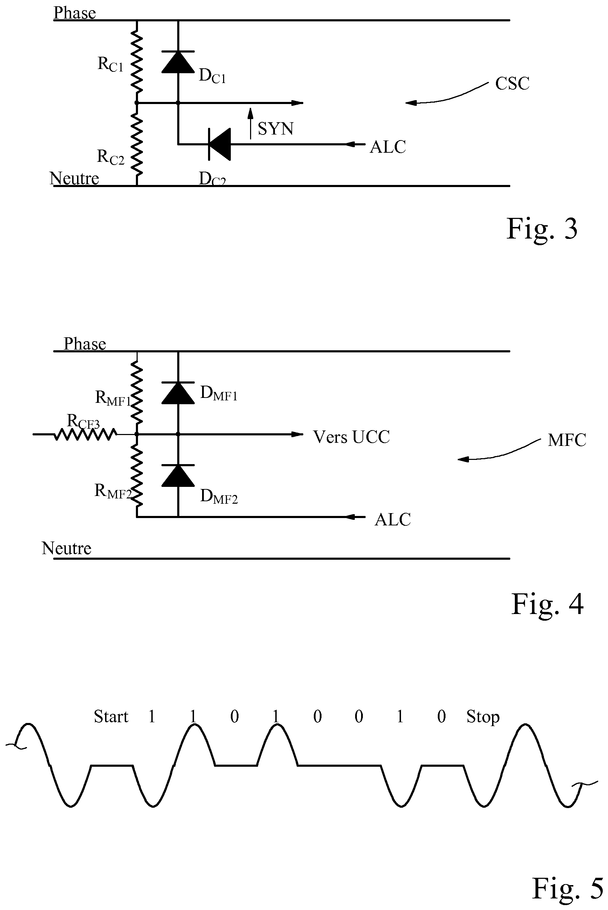

La Fig. 3 est un schéma synoptique d'un mode de réalisation d'un circuit de synchronisation CSC. Il comprend un pont diviseur de tension constitué de deux résistances R_{C1} et R_{C2} en série reliées entre la phase et le neutre du secteur. En parallèle sur la résistance R_{C1} reliée à la phase du secteur, se trouve une diode D_{C1} dont la cathode est reliée à la phase du secteur et l'anode au point commun des résistances R_{C1} et R_{C2}. Une seconde diode D_{C2} a sa cathode reliée au point commun des résistances R_{C1} et R_{C2} et son anode au potentiel délivré par l'alimentation ALC. Le point commun des résistances R_{C1} et R_{C2} constitue la sortie du circuit de synchronisation CSC, le signal de synchronisation étant présent entre ce point et la borne au potentiel de l'alimentation ALC. Ce signal de synchronisation se présente sous la forme de signaux carrés d'amplitude comprise entre le potentiel de la phase du secteur et le potentiel délivré par l'alimentation ALC, ce, à la fréquence du secteur.

La Fig. 4 est un schéma synoptique d'un mode de réalisation d'un circuit de mise en forme MFC de l'unité centrale UC. Il comprend un pont diviseur de tension constitué de deux résistances RC_{F1} et RC_{F2} en série reliées entre la phase et le potentiel délivré par l'alimentation ALC. En parallèle sur la résistance RC_{F1} reliée à la phase du secteur, se trouve une diode D_{MF1} dont la cathode est reliée à la phase du secteur et l'anode au point commun des résistances R_{C1} et R_{C2}. De même, en parallèle sur la résistance RC_{F2} reliée à l'alimentation ALC, se trouve une diode D_{MF2} dont l'anode est reliée à l'alimentation ALC et la cathode au point commun des résistances RC_{F1} et RC_{F2}. Une résistance RC_{F3} est reliée, par une borne, au point commun des résistances RC_{F1} et RC_{F2} et, par l'autre borne, au bus FP. Le point commun des résistances R_{MF1} et R_{MF2} constitue la sortie du circuit de synchronisation MFC, le signal mis en forme étant présent entre ce point commun et la borne au potentiel de l'alimentation ALC. Ce signal mis en forme se présente sous la forme de signaux carrés d'amplitude comprise entre le potentiel de la phase du secteur et le potentiel délivré par l'alimentation ALC, au rythme des suites de 0 et 1 du signal de données présent sur le bus FP.

On notera que le circuit de mise en forme MFP d'une unité périphérique UP est sensiblement identique à la différence près que phase et neutre du secteur doivent être inversés.

La transmission de données sur le bus FP est par exemple du type asynchrone, avec un bit start et un bit stop, les données étant sous la forme d'octets. Chaque état binaire est codé sur un temps élémentaire correspondant à une demi-alternance du secteur. Ainsi, pour la transmission de l'octet 11010010, la forme du signal sur le bus FP est celui qui est représenté à la Fig. 5.

Dans un mode de réalisation, l'unité centrale UC est partie intégrante d'une unité de gestion d'énergie et chaque unité périphérique UP est une unité de chauffage, notamment à thermostat intégré.

On comprendra qu'ainsi, plusieurs types de données pourraient être transmis : des données de commande, des données relatives à des informations thermiques (mode de fonctionnement, autorisation chaud/froid, consigne de température, température ambiante, température extérieure, etc.) ou à des informations énergétiques (énergie consommée, informations horaires, délestage, etc.).

## Revendications

1. Système de transmission de données par au moins un bus unifilaire (FP) entre une unité d'émission/réception centrale (TUC) et au moins une unité périphérique (UP), lesdites données étant transmises en synchronisme avec les alternances de la phase du secteur de l'émetteur en portant le potentiel dudit fil unifilaire (FP) soit au potentiel du neutre du secteur, soit au potentiel de la phase du secteur, ladite unité d'émission/réception (TUC) comprenant elle-même une unité de contrôle (UCC) prévue pour commander un interrupteur commandé (ICC) et ladite unité périphérique (UP) étant une unité d'émission/réception périphérique (TUP) comprenant une unité de contrôle (UCP) prévue pour commander un interrupteur commandé (ICP), **caractérisé en ce que**, pour ledit ou chaque bus unifilaire (FP), ledit interrupteur commandé (ICC) a une borne d'interrupteur qui est reliée à la phase du secteur alors que l'autre borne d'interrupteur est connectée, via une résistance (RC), audit bus unifilaire et **en ce que** ledit interrupteur commandé (ICP) a une borne d'interrupteur qui est reliée au neutre du secteur alors que l'autre borne d'interrupteur est connectée, via une résistance (RP), audit bus unifilaire, le potentiel dudit bus unifilaire (FP) étant, lorsque l'interrupteur commandé (ICC) est ouvert, celui du neutre du secteur.

2. Système de transmission de données selon la revendication 1, **caractérisé en ce que** ledit interrupteur commandé (ICC) est un triac dont l'anode (A1) est reliée à la phase du secteur, l'anode (A2) au bus unifilaire (FP) via ladite résistance (RC) et la grille à ladite sortie de ladite unité de contrôle (UCC), ladite unité de contrôle (UCC) étant alimentée par une alimentation (ALC) avec pour potentiel de référence la phase du secteur.

3. Système de transmission de données selon la revendication 1 ou 2, **caractérisé en ce que** ledit interrupteur commandé (ICP) est un triac dont l'anode (A1) est reliée au neutre du secteur, l'anode (A2) au bus unifilaire (FP) via ladite résistance (RP) et la grille à ladite sortie de ladite unité de contrôle (UCP), ladite unité de contrôle (UCP) étant alimentée par une alimentation (ALP) avec pour potentiel de référence le neutre du secteur.

4. Système de transmission de données selon une des revendications précédentes, **caractérisé en ce que** ladite unité de contrôle centrale UCC et/ou ladite unité de contrôle périphérique (UCP) est reliée au bus unifilaire (FP) par l'intermédiaire d'un circuit de mise en forme (MFC ; MFP).

5. Procédé de transmission de données par au moins un bus unifilaire (FP) entre une unité d'émission/réception centrale (TUC) et au moins une unité périphérique (UP) d'un système de transmission de données selon une des revendications précédentes, lesdites données étant transmises en synchronisme avec les alternances de la phase du secteur de l'émetteur en portant le potentiel dudit fil unifilaire (FP) soit au potentiel du neutre du secteur, soit au potentiel de la phase du secteur, ladite unité d'émission/réception (TUC) comprenant elle-même une unité de contrôle (UCC) prévue pour commander un interrupteur commandé (ICC) ayant une borne d'interrupteur qui est reliée à la phase du secteur alors que l'autre borne d'interrupteur est connectée, via une résistance (RC), audit bus unifilaire, ladite unité périphérique (UP) étant une unité d'émission/réception périphérique (TUP) comprenant un interrupteur commandé (ICP) et une unité de contrôle (UCP) prévue pour commander ledit interrupteur commandé (ICP), ledit interrupteur commandé (ICP) ayant une borne d'interrupteur qui est reliée au neutre du secteur alors que l'autre borne d'interrupteur est connectée, via une résistance (RP), audit bus unifilaire, le potentiel dudit bus unifilaire (FP) étant, lorsque l'interrupteur' commandé' (ICC) est ouvert, celui du neutre du secteur, ledit procédé consistant,
- pour transmettre des données de l'unité périphérique (UP) vers ladite unité d'émission/réception centrale (TUC), à d'abord fermer l'interrupteur commandé (ICC) de l'unité centrale (TUC) puis, soit à fermer l'interrupteur (ICP) de l'unité périphérique (UP) pour émettre un premier niveau logique sur le bus unifilaire (FP), soit à laisser ouvert l'interrupteur (ICP) de l'unité périphérique (UP) pour émettre un second niveau logique sur le bus unifilaire (FP) et,
- pour transmettre des données de la ou d'une unité d'émission/réception centrale (TUC) à l'unité périphérique (UP), soit à fermer l'interrupteur (ICC) de l'unité d'émission/réception centrale (TUC) pour émettre un premier niveau logique sur le bus unifilaire (FP), soit à laisser ouvert l'interrupteur (ICC) de l'unité d'émission/réception (TUC) pour émettre un second niveau logique sur le bus unifilaire (FP).

6. Procédé de transmission de données selon la revendication 5, **caractérisé en ce que** la transmission de données sur le bus unifilaire (FP) est du type asynchrone, chaque état binaire étant codé sur un temps élémentaire correspondant à une demi-alternance du secteur.

## Patentansprüche

1. System zur Datenübertragung über wenigstens einen Eindrahtbus (FP) zwischen einer zentralen Sende- und Empfangseinheit (TUC) und wenigstens einer peripheren Einheit (UP), wobei die Daten synchron mit den Wechseln der Phasen des Stromnetzes des Senders übertragen werden, indem das Potential des Einzeldrahtes (FP) entweder auf das Potential des Nullleiters des Stromnetzes oder auf das Potential der Phase des Stromnetzes gebracht wird, wobei die Sende- und Empfangseinheit (TUC) ihrerseits eine Steuereinheit (UCC) umfasst, die dafür vorgesehen ist, einen gesteuerten Schalter (ICC) zu steuern, und wobei die periphere Einheit (UP) eine periphere Sende- und Empfangseinheit (TUP) ist, die eine Steuereinheit (UCP) umfasst, die dafür vorgesehen ist, einen gesteuerten Schalter (ICP) zu steuern, **dadurch gekennzeichnet, dass** für den oder jeden Eindrahtbus (FP) der gesteuerte Schalter (ICC) eine Schalterklemme aufweist, welche mit der Phase des Stromnetzes verbunden ist, während die andere Schalterklemme über einen Widerstand (RC) mit dem Eindrahtbus verbunden ist, und dadurch, dass der gesteuerte Schalter (ICP) eine Schalterklemme aufweist, welche mit dem Nullleiter des Stromnetzes verbunden ist, während die andere Schalterklemme über einen Widerstand (RP) mit dem Eindrahtbus verbunden ist, wobei das Potential des Eindrahtbusses (FP), wenn der gesteuerte Schalter (ICC) geöffnet ist, dasjenige des Nullleiters des Stromnetzes ist.

2. System zur Datenübertragung nach Anspruch 1, **dadurch gekennzeichnet, dass** der gesteuerte Schalter (ICC) ein Triac ist, dessen Anode (A1) mit der Phase des Stromnetzes, dessen Anode (A2) mit dem Eindrahtbus (FP) über den Widerstand (RC) und dessen Gitter mit dem Ausgang der Steuereinheit (UCC) verbunden ist, wobei die Steuereinheit (UCC) von einer Stromversorgung (ALC) mit der Phase des Stromnetzes als Referenzpotential gespeist wird.

3. System zur Datenübertragung nach Anspruch 1 oder 2, **dadurch gekennzeichnet, dass** der gesteuerte Schalter (ICP) ein Triac ist, dessen Anode (A1) mit dem Nullleiter des Stromnetzes, dessen Anode (A2) mit dem Eindrahtbus (FP) über den Widerstand (RP) und dessen Gitter mit dem Ausgang der Steuereinheit (UCP) verbunden ist, wobei die Steuereinheit (UCP) von einer Stromversorgung (ALP) mit dem Nullleiter des Stromnetzes als Referenzpotential gespeist wird.

4. System zur Datenübertragung nach einem der vorhergehenden Ansprüche, **dadurch gekennzeichnet, dass** die zentrale Steuereinheit (UCC) und/oder die periphere Steuereinheit (UCP) mit dem Eindrahtbus (FP) über eine Signalformungsschaltung (MFC; MFP) verbunden ist.

5. Verfahren zur Datenübertragung über wenigstens einen Eindrahtbus (FP) zwischen einer zentralen Sende- und Empfangseinheit (TUC) und wenigstens einer peripheren Einheit (UP) eines Systems zur Datenübertragung nach einem der vorhergehenden Ansprüche, wobei die Daten synchron mit den Wechseln der Phasen des Stromnetzes des Senders übertragen werden, indem das Potential des Einzeldrahtes (FP) entweder auf das Potential des Nullleiters des Stromnetzes oder auf das Potential der Phase des Stromnetzes gebracht wird, wobei die Sende- und Empfangseinheit (TUC) ihrerseits eine Steuereinheit (UCC) umfasst, die dafür vorgesehen ist, einen gesteuerten Schalter (ICC) zu steuern, der eine Schalterklemme aufweist, welche mit der Phase des Stromnetzes verbunden ist, während die andere Schalterklemme über einen Widerstand (RC) mit dem Eindrahtbus verbunden ist, wobei die periphere Einheit (UP) eine periphere Sende- und Empfangseinheit (TUP) ist, die einen gesteuerten Schalter (ICP) und eine Steuereinheit (UCP), die dafür vorgesehen ist, den gesteuerten Schalter (ICP) zu steuern, umfasst, wobei der gesteuerte Schalter (ICP) eine Schalterklemme aufweist, welche mit dem Nullleiter des Stromnetzes verbunden ist, während die andere Schalterklemme über einen Widerstand (RP) mit dem Eindrahtbus verbunden ist, wobei das Potential des Eindrahtbusses (FP), wenn der gesteuerte Schalter (ICC) geöffnet ist, dasjenige des Nullleiters des Stromnetzes ist, wobei das Verfahren darin besteht,
um Daten von der peripheren Einheit (UP) zu der zentralen Sende- und Empfangseinheit (TUC) zu übertragen, zuerst den gesteuerten Schalter (ICC) der zentralen Einheit (TUC) zu schließen, dann entweder den Schalter (ICP) der peripheren Einheit (UP) zu schließen, um einen ersten logischen Pegel auf dem Eindrahtbus (FP) zu senden, oder den Schalter (ICP) der peripheren Einheit (UP) geöffnet zu lassen, um einen zweiten logischen Pegel auf dem Eindrahtbus (FP) zu senden, und,
um Daten von der oder von einer zentralen Sende- und Empfangseinheit (TUC) zu der peripheren Einheit (UP) zu übertragen, entweder den Schalter (ICC) der zentralen Sende- und Empfangseinheit (TUC) zu schließen, um einen ersten logischen Pegel auf dem Eindrahtbus (FP) zu senden, oder den Schalter (ICC) der Sende- und Empfangseinheit (TUC) geöffnet zu lassen, um einen zweiten logischen Pegel auf dem Eindrahtbus (FP) zu senden.

6. Verfahren zur Datenübertragung nach Anspruch 5, **dadurch gekennzeichnet, dass** die Datenübertragung auf dem Eindrahtbus (FP) vom asynchronen Typ ist, wobei jeder binäre Zustand auf einer elementaren Zeit codiert ist, die einer Halbperiode des Netzstroms entspricht.

## Claims

1. System for transmitting data via at least one single-wire bus (FP) between a central transmission/reception unit (TUC) and at least one peripheral unit (UP), said data being transmitted in sync with the half-cycles of the phase of the mains power supply of the transmitter and bringing the potential of said single-wire bus (FP) either to the potential of the neutral of the mains power supply or to the potential of the phase of the mains power supply, said transmission/reception unit (TUC) itself comprising a control unit (UCC) designed to control a controlled switch (ICC) and said peripheral unit (UP) being a peripheral transmission/reception unit (TUP) comprising a control unit (UCP) designed to control a controlled switch (ICP), **characterized in that**, for said or each single-wire bus (FP), said controlled switch (ICC) has a switch terminal that is connected to the phase of the mains power supply while the other switch terminal is connected, via a resistor (RC), to said single-wire bus and **in that** said controlled switch (ICP) has a switch terminal that is connected to the neutral of the mains power supply while the other switch terminal is connected, via a resistor (RP), to said single-wire bus, the potential of said single-wire bus (FP) being, when the controlled switch (ICC) is open, that of the neutral of the mains power supply.

2. Data transmission system according to Claim 1, **characterized in that** said controlled switch (ICC) is a triac, the anode (A1) of which is connected to the phase of the mains power supply, the anode (A2) of which is connected to the single-wire bus (FP) via said resistor (RC) and the gate of which is connected to said output of said control unit (UCC), said control unit (UCC) being supplied with power by a power supply (ALC), the reference potential of which is the phase of the mains power supply.

3. Data transmission system according to Claim 1 or 2, **characterized in that** said controlled switch (ICP) is a triac, the anode (A1) of which is connected to the neutral of the mains power supply, the anode (A2) of which is connected to the single-wire bus (FP) via said resistor (RP) and the gate of which is connected to said output of said control unit (UCP), said control unit (UCP) being supplied with power by a power supply (ALP), the reference potential of which is the neutral of the mains power supply.

4. Data transmission system according to one of the preceding claims, **characterized in that** said central control unit UCC and/or said peripheral control unit (UCP) is connected to the single-wire bus (FP) via a shaping circuit (MFC; MFP).

5. Method for transmitting data via at least one single-wire bus (FP) between a central transmission/reception unit (TUC) and at least one peripheral unit (UP) of a data transmission system according to one of the preceding claims, said data being transmitted in sync with the half-cycles of the phase of the mains power supply of the transmitter and bringing the potential of said single-wire bus (FP) either to the potential of the neutral of the mains power supply or to the potential of the phase of the mains power supply, said transmission/reception unit (TUC) itself comprising a control unit (UCC) designed to control a controlled switch (ICC) having a switch terminal that is connected to the phase of the mains power supply while the other switch terminal is connected, via a resistor (RC), to said single-wire bus, said peripheral unit (UP) being a peripheral transmission/reception unit (TUP) comprising a controlled switch (ICP) and a control unit (UCP) designed to control said controlled switch (ICP), said controlled switch (ICP) having a switch terminal that is connected to the neutral of the mains power supply while the other switch terminal is connected, via a resistor (RP), to said single-wire bus, the potential of said single-wire bus (FP) being, when the controlled switch (ICC) is open, that of the neutral of the mains power supply, said method consisting of:
- in order to transmit data from the peripheral unit (UP) to said central transmission/reception unit (TUC), first closing the controlled switch (ICC) of the central unit (TUC) then, either closing the switch (ICP) of the peripheral unit (UP) in order to transmit a first logic level over the single-wire bus (FP), or leaving the switch (ICP) of the peripheral unit (UP) open in order to transmit a second logic level over the single-wire bus (FP) and;
- in order to transmit data from the or a central transmission/reception unit (TUC) to the peripheral unit (UP), either closing the switch (ICC) of the central transmission/reception unit (TUC) in order to transmit a first logic level over the single-wire bus (FP), or leaving the switch (ICC) of the transmission/reception unit (TUC) open in order to transmit a second logic level over the single-wire bus (FP).

6. Data transmission method according to Claim 5, **characterized in that** the transmission of data over the single-wire bus (FP) is of asynchronous type, each binary state being encoded over an elementary time corresponding to half a half-cycle of the mains power supply.
